# EUROPÄISCHE PATENTANMELDUNG

(11) **EP 3 863 311 A1**
(43) Veröffentlichungstag der Anmeldung: **11.08.2021**
(21) Anmeldenummer: 20155316.1
(22) Anmeldetag: 04.02.2020
(51) Int. Cl.: H04W 4/42, G01M 17/08

(54) **VERFAHREN UND VORRICHTUNG ZUM PRÜFEN EINES EINSTIEGSSYSTEMS FÜR EIN FAHRZEUG**

(71) Anmelder: Knorr-Bremse Gesellschaft mit beschränkter Haftung, 2340 Mödling (AT)
(72) Erfinder: BRAMAUER, Johann, 3341 Ybbsitz (AT); EKKER, Reinhard, 3270 Scheibbs (AT)
(74) Vertreter: Aurigium Leischner & Luthe

(57) **Zusammenfassung**

Ein Verfahren zum Prüfen eines Einstiegssystems (105) für ein Fahrzeug (110; 207) umfasst einen Schritt des Empfangens und/oder einen Schritt des Einlesens und einen Schritt des Generierens. Im Schritt des Empfangens wird ein Datensignal (135) über eine Schnittstelle (115) zu einer Datenbank (120) empfangen, wobei das Datensignal (135) zumindest einen in der Datenbank (120) hinterlegten Einstiegssystemwert des Einstiegssystems (105) repräsentiert. Im Schritt des Einlesens wird ein Eingabesignal (140) eingelesen, das einen manuell eingegebenen Prüfwert eines Prüfschritts des Einstiegssystems (105) an einer Eingabeeinrichtung (145) repräsentiert. Im Schritt des Generierens wird ein elektronisches Prüfprotokoll (150) unter Verwendung des Eingabesignals (140) und/oder Datensignals (135) generiert.

## Beschreibung

Der vorliegende Ansatz bezieht sich auf ein Verfahren und eine Vorrichtung zum Prüfen eines Einstiegssystems für ein Fahrzeug.

Aktuell werden Prüfabläufe für Einstiegssysteme mittels vorgegebener Papier-Checklisten absolviert.

Vor diesem Hintergrund ist es die Aufgabe des vorliegenden Ansatzes ein verbessertes Verfahren zum Prüfen eines Einstiegssystems für ein Fahrzeug und eine verbesserte Vorrichtung zum Prüfen eines Einstiegssystems für ein Fahrzeug zu schaffen.

Diese Aufgabe wird durch eine Verfahren mit den Merkmalen des Verfahrensanspruchs 1, durch eine Vorrichtung nach Anspruch 11 und durch ein Computerprogramm nach Anspruch 12 gelöst.

Die mit dem vorgestellten Ansatz erreichbaren Vorteile bestehen darin, dass ein automatisiertes Prüfverfahren geschaffen wird.

Ein Verfahren zum Prüfen eines Einstiegssystems für ein Fahrzeug umfasst einen Schritt des Empfangens, zusätzlich oder alternativ einen Schritt des Einlesens und einen Schritt des Generierens. Im Schritt des Empfangens wird ein Datensignal über eine Schnittstelle zu einer Datenbank empfangen, wobei das Datensignal zumindest einen in der Datenbank hinterlegten Einstiegssystemwert des Einstiegssystems repräsentiert. Im Schritt des Einlesens wird ein Eingabesignal eingelesen, das einen manuell eingegebenen Prüfwert eines Prüfschritts des Einstiegssystems an einer Eingabeeinrichtung repräsentiert. Im Schritt des Generierens wird ein elektronisches Prüfprotokoll unter Verwendung des Eingabesignals und zusätzlich oder alternativ Datensignals generiert.

Dieses Verfahren kann beispielsweise in Software oder Hardware oder in einer Mischform aus Software und Hardware beispielsweise in einem Steuergerät implementiert sein.

Bei dem Einstiegssystem kann es sich um ein Türsystem handeln, welches elektronisch geöffnet und zusätzlich oder alternativ elektronisch geschlossen werden kann. Das Einstiegssystem kann zum Ein- und Aussteigen von Personen in das oder aus dem Fahrzeug dienen, welches beispielsweise ein Schienenfahrzeug sein kann. Das Fahrzeug kann auch mehrere solcher Einstiegssysteme aufweisen, wobei jedes der Einstiegssysteme ein eigenes Türsteuergerät aufweisen kann. Alternativ oder zusätzlich kann bei dem Prüfen auch eine Überprüfung der Funktion nicht die Funktion der Türe selbst, sondern einer Trittstufe getestet werden. Zum Prüfen des Einstiegssystems sind von einem Prüfer unterschiedliche Prüfschritte durchzuführen, um einen Zustand des Einstiegssystems festzustellen und eventuelle Wartungsarbeiten initiieren zu können. Diese Prüfschritte können nun dank des hier vorgestellten Verfahrens digitalisiert durchgeführt werden. Bei der Datenbank kann es sich beispielsweise um eine Einrichtung in dem Türsteuergerät oder aber auch der Cloud handeln, von der/dem der hinterlegte Einstiegssystemwert ausgelesen werden kann, um einen zusätzlichen manuellen Prüfschritt einzusparen. Im Schritt des Empfangens kann das Datensignal demnach über eine Schnittstelle zu zumindest einem Türsteuergerät des Einstiegssystems empfangen werden. Im Schritt des Einlesens kann das Eingabesignal eingelesen werden, wobei der Prüfwert an einer Eingabeeinrichtung eines mobilen Prüfgeräts eingegeben wurde. Als ein mobiles Prüfgerät oder mobiles Gerät im Allgemeinen ist im Folgenden ein manuell tragbares Gerät, beispielsweise ein Laptop, Notebook oder Smartphone zu verstehen. Die schafft für den Prüfer eine mobile Möglichkeit zur Durchführung der manuellen Prüfschritte. Bei der Eingabeeinrichtung kann es sich um eine mechanische oder elektronische, beispielsweise berührungssensitive, Taste auf dem mobilen Prüfgerät handeln. Das hier vorgestellte Verfahren ermöglicht also ein automatisiertes Generieren eines Prüfprotokolls unter Verwendung entweder von einem oder mehreren manuell eingegebenen Prüfwerten oder unter Verwendung von einem oder mehreren empfangenen hinterlegten Einstiegssystemwerten, oder unter Verwendung einer Kombination aus manuell eingegebenen Prüfwerten und empfangenen hinterlegten Einstiegssystemwerten. Eine Zeit zur Durchführung eines vollständigen Prüflaufs kann dank dieses Verfahrens vorteilhafterweise sehr kurz ausfallen.

Das Verfahren kann ferner einen Schritt des Aktivierens aufweisen, in dem der Schritt des Empfangens ansprechend auf ein Aktivierungssignal durchgeführt wird. Das Aktivierungssignal kann ansprechend auf eine manuelle Betätigung eines Startknopfes zum Starten einer Prüflaufsoftware auf dem mobilen Prüfgerät ausgegeben werden. Zusätzlich oder alternativ kann das Türsteuergerät ansprechend auf das Aktivierungssignal in einen Prüfmodus versetzt werden bis der Prüflauf abgeschlossen ist.

Es ist weiterhin von Vorteil, wenn das Verfahren gemäß einer Ausführungsform einen Schritt des weiteren Einlesens aufweist, in dem ein Prüfplan eingelesen und zusätzlich oder alternativ angezeigt wird, der eine Aufstellung durchzuführender Prüfschritte umfasst, wobei der Schritt des Empfangens und zusätzlich oder alternativ der Schritt des Einlesens in Abhängigkeit von dem Prüfplan durchgeführt werden. Ein solcher Prüfplan kann dem Prüfer eine Orientierung über die durchzuführenden Prüfschritte verschaffen. Diese können beispielsweise auf dem mobilen Prüfgerät angezeigt und im Folgenden von dem Prüfer abgearbeitet werden.

Das Verfahren kann auch einen Schritt des Anzeigens aufweisen, in dem zumindest ein Aufforderungssignal ausgegeben wird, das für einen Nutzer einen durchzuführenden Prüfschritt auf einer Anzeigeeinrichtung anzeigt, um das Eingabesignal zu erhalten. Auch der Schritt des Anzeigens kann unter Verwendung des Prüfplans durchgeführt werden. So kann ein vorgegebener Prüflauf sequenziell realisiert werden. Unter Verwendung einer geeigneten Software, mit beispielsweise einem Assistenten, kann der Prüfplan dazu dienen, den Prüfer durch die durchzuführenden Prüfschritte zu leiten und dabei entsprechende Eingabesignale aktiv einzufordern.

Beispielsweise kann im Schritt des Empfangens das Datensignal drahtgebunden, insbesondere mittels Ethernet (speziell eines Ethernet-Protokolls), und zusätzlich oder alternativ drahtlos empfangen werden. Mittels Ethernet bzw. dem Ethernet-Protokoll kann schnell und einfach auf ein bereits vorhandenes Netzwerk, beispielsweise ein Zugnetzwerk, zurückgegriffen werden. Eine drahtlose Kommunikation hingegen ermöglicht eine besonders große Mobilität für den Prüfer und das Prüfgerät.

Im Schritt des Einlesens kann das Eingabesignal von einem WLAN-fähigen mobilen Gerät eingelesen und zusätzlich oder alternativ bereitgestellt werden, insbesondere wobei das mobile Gerät dazu ausgeformt sein kann, um an einem Körperteil befestigt zu werden. Das mobile Gerät kann eine Handlungsfreiheit des Prüfers erhöhen, indem es an beispielsweise einem Arm des Prüfers befestigbar ist, beispielsweise ähnlich einer Befestigung einer Uhr. Beide Hände des Prüfers können somit zur Durchführung von manuellen Prüfschritten frei bleiben. Das zuvor beschriebene mobile Prüfgerät kann zusätzlich zum Einsatz kommen, wobei beispielsweise auf dem mobilen Prüfgerät ein gesamter Prüfplan angezeigt und auf dem mobilen Gerät lediglich ein aktuell durchzuführender Prüfschritt angezeigt und betätigt werden kann.

Es ist weiterhin von Vorteil, wenn das Verfahren gemäß einer Ausführungsform einen Schritt des Speicherns aufweist, in dem das vollständige Prüfprotokoll in einer nicht flüchtigen Speichereinrichtung gespeichert wird. So kann das vollständige Prüfprotokoll archiviert oder für eine künftige Auswertung bereitgestellt werden.

Im Schritt des Einlesens kann ferner ein Bildsignal eingelesen werden, das ein Abbild zumindest eines Ausschnitts eines Führerstandes repräsentiert, wobei im Schritt des Generierens das Prüfprotokoll unter Verwendung des Bildsignals generiert wird. So können Informationen, welche während des Prüflaufs im Führerstand angezeigt werden, für den Prüfer auch außerhalb des Führerstands einsehbar sein, beispielsweise auf dem mobilen Gerät und zusätzlich oder alternativ dem mobilen Prüfgerät.

Gemäß einer weiteren Ausführungsform kann im Schritt des Empfangens eine Zuordnungsinformation eingelesen werden, die eine Zuordnung des hinterlegten Einstiegssystemwerts zu einer von mehreren zu prüfenden Einstiegssystemen repräsentiert, wobei im Schritt des Generierens das Prüfprotokoll unter Verwendung der Zuordnungsinformation erfolgt. Eine solche Ausführungsform bietet den Vorteil, dass für den Fall, dass eine Prüfung nicht für einzelne Einstiegssysteme, beispielsweise Türen, differenziert werden kann, bei paralleler Prüfung mehrerer Türen eine Interaktion der Prüfgeräte stattfinden kann, um eine Zuordnung des Zustands am Fahrzeug zum jeweiligen Türsystem/Prüfschritt zu ermöglichen.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Verfahrens zum Prüfen eines Einstiegssystems für ein Fahrzeug. Hierzu kann die Vorrichtung beispielsweise auf Sensorsignale wie ein Datensignal, das zumindest einen in der Datenbank hinterlegten Einstiegssystemwert des Einstiegssystems repräsentiert, und zusätzlich oder alternativ ein Eingabesignal, das einen manuell eingegebenen Prüfwert eines Prüfschritts des Einstiegssystems an einer Eingabeeinrichtung repräsentiert, zugreifen. Die Ansteuerung erfolgt über Aktoren wie eine Schnittstelle zu der Datenbank zum Empfangen des Datensignals und zusätzlich oder alternativ eine Einleseeinrichtung zum Einlesen des Eingabesignals und eine Generiereinrichtung zum Generieren eines elektronischen Prüfprotokolls unter Verwendung des Eingabesignals und zusätzlich oder alternativ des Datensignals.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Vorrichtung zum Prüfen eines Einstiegssystems für ein Fahrzeug gemäß einem Ausführungsbeispiel;
Fig. 2 ; eine schematische Darstellung einer Vorrichtung gemäß einem Ausführungsbeispiel;
Fig. 3 eine schematische Darstellung eines Prüfplans einer Vorrichtung gemäß einem Ausführungsbeispiel;
Fig. 4 eine schematische Darstellung eines Prüfschritts eines Prüfplans einer Vorrichtung gemäß einem Ausführungsbeispiel;
Fig. 5 eine schematische Darstellung eines Konzepts für einen mittels Software unterstützten Prüflauf unter Verwendung einer Vorrichtung gemäß einem Ausführungsbeispiel; und
Fig. 6 ein Ablaufdiagramm eines Verfahrens zum Prüfen eines Einstiegssystems für ein Fahrzeug gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

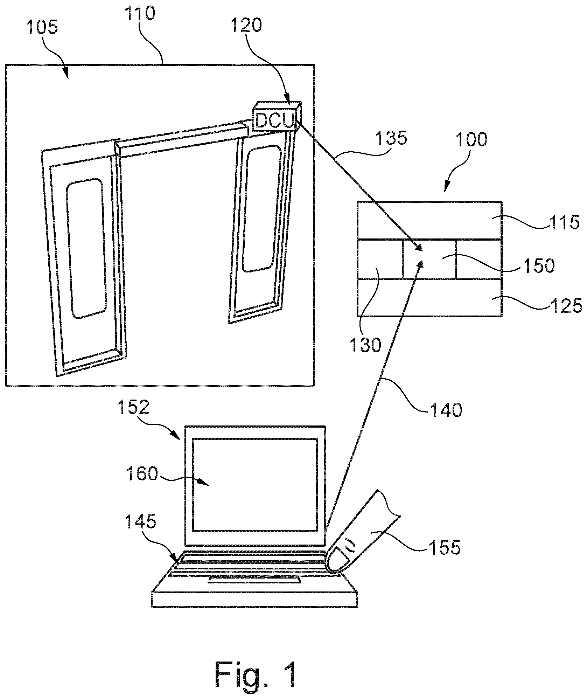

**Fig. 1** zeigt eine schematische Darstellung einer Vorrichtung 100 zum Prüfen eines Einstiegssystems 105 für ein Fahrzeug 110 gemäß einem Ausführungsbeispiel.

Die Vorrichtung 100 weist eine Schnittstelle 115 zu einer Datenbank 120 und/oder eine Einleseeinrichtung 125 und eine Generiereinrichtung 130 auf. Die Schnittstelle 115 ist dazu ausgebildet, um ein Datensignal 135 zu empfangen, das zumindest einen in der Datenbank 120 hinterlegten Einstiegssystemwert des Einstiegssystems 105 repräsentiert. Die Einleseeinrichtung 125 ist dazu ausgebildet, um ein Eingabesignal 140 einzulesen, das einen manuell eingegebenen Prüfwert eines Prüfschritts des Einstiegssystems 105 an einer Eingabeeinrichtung 145 repräsentiert. Die Generiereinrichtung 130 ist dazu ausgebildet, um unter Verwendung des Eingabesignals 140 und/oder des Datensignals 135 ein elektronisches Prüfprotokoll 150 zu generieren.

Gemäß einem alternativen Ausführungsbeispiel handelt es sich bei dem Einstiegssystem 105 um ein beliebiges anderes System mit einer Steuerungselektronik, wobei die Vorrichtung 100 der vorangehenden Beschreibung entsprechend zum Prüfen dieses Systems ausgebildet ist. Das Fahrzeug 110 ist gemäß diesem Ausführungsbeispiel als ein Schienenfahrzeug ausgeführt. Gemäß einem alternativen Ausführungsbeispiel kann es sich bei dem Fahrzeug 110 um einen Lastkraftwagen oder Personenkraftwagen handeln. Bei dem Einstiegssystem 105 handelt es sich gemäß diesem Ausführungsbeispiel um ein Türsystem, welches elektronisch geöffnet und/oder elektronisch geschlossen werden kann. Hierzu weist das Einstiegssystem 105 gemäß diesem Ausführungsbeispiel ein Türsteuergerät DCU auf, das gemäß diesem Ausführungsbeispiel die Datenbank 120 umfasst. Gemäß einem Ausführungsbeispiel weist das Fahrzeug 110 mehrere Einstiegssysteme 105 auf, wobei gemäß einem Ausführungsbeispiel jedes der Einstiegssysteme 105 ein eigenes derartiges Türsteuergerät DCU aufweist. Die Einleseeinrichtung 125 ist gemäß diesem Ausführungsbeispiel dazu ausgebildet, um das Eingabesignal 140 einzulesen, wobei der Prüfwert an der Eingabeeinrichtung 145 eines mobilen Prüfgeräts 152 eingegeben wurde. Das mobile Prüfgerät 152 ist gemäß diesem Ausführungsbeispiel als ein manuell tragbares Gerät in Form eines Laptops oder Notebooks ausgeformt. Gemäß einem alternativen Ausführungsbeispiel ist das mobile Prüfgerät 152 als ein Smartphone ausgeformt. Bei der Eingabeeinrichtung 145 handelt es sich gemäß diesem Ausführungsbeispiel um eine Computertastatur mit einer oder mehreren mechanischen und/oder elektronischen, beispielsweise berührungssensitiven, Tasten, welche manuell von einem Prüfer 155, im Folgenden auch "Nutzer" oder "Anwender" genannt, bedienbar sind, um das Eingabesignal 140 zu erzeugen.

Die Vorrichtung 100 ist ferner gemäß diesem Ausführungsbeispiel dazu ausgebildet, um das Datensignal 135 ansprechend auf ein Aktivierungssignal zu empfangen. Das Aktivierungssignal wird gemäß diesem Ausführungsbeispiel ansprechend auf eine manuelle Betätigung eines Startknopfes zum Starten einer Prüflaufsoftware auf dem mobilen Prüfgerät 152 ausgegeben. Gemäß diesem Ausführungsbeispiel ist die Vorrichtung 100 dazu ausgebildet, um das Türsteuergerät DCU ansprechend auf das Aktivierungssignal in einen Prüfmodus zu versetzen bis ein Prüflauf abgeschlossen ist.

Die Einleseeinrichtung 125 ist ferner gemäß diesem Ausführungsbeispiel dazu ausgebildet, um einen Prüfplan einzulesen und/oder anzuzeigen, der eine Aufstellung durchzuführender Prüfschritte umfasst, wobei die Schnittstelle 115 dazu ausgebildet ist, um das Datensignal 135 in Abhängigkeit von dem Prüfplan zu empfangen und/oder die Einleseeinrichtung 125 dazu ausgebildet ist, um das Eingabesignal 140 in Abhängigkeit von dem Prüfplan einzulesen. Der Prüfplan wird gemäß einem Ausführungsbeispiel auf einer Anzeigeeinrichtung 160 des mobilen Prüfgeräts 152 angezeigt.

Gemäß diesem Ausführungsbeispiel ist die Vorrichtung 100 dazu ausgebildet, um unter Verwendung des Prüfplans ein Aufforderungssignal auszugeben, das für den Nutzer einen durchzuführenden Prüfschritt auf der Anzeigeeinrichtung 160 oder einer weiteren Anzeigeeinrichtung anzeigt, um das Eingabesignal 140 zu erhalten.

Die Schnittstelle 115 ist gemäß diesem Ausführungsbeispiel dazu ausgebildet, um das Datensignal 135 drahtgebunden, insbesondere mittels Ethernet bzw. einem Ethernet-Protokoll, und/oder drahtlos, beispielsweise mittels WLAN, zu empfangen.

Die Vorrichtung 100 ist ferner gemäß diesem Ausführungsbeispiel dazu ausgebildet, um das vollständige Prüfprotokoll 150 in einer nicht flüchtigen Speichereinrichtung zu speichern. Als das vollständige Prüfprotokoll 150 ist ein fertiges Prüfprotokoll 150 nach vollständiger Durchführung des Prüflaufs, beispielsweise nach Abarbeitung aller Prüfschritte des Prüfplans, zu verstehen.

Die Vorrichtung 100 ist gemäß einem Ausführungsbeispiel insgesamt oder aber es sind gemäß einem anderen Ausführungsbeispiel einzelne Einrichtungen 115,125,130 der Vorrichtung 100 in beliebiger Anordnung in dem mobilen Prüfgerät 152 und/oder einem sogenannten "Back Office", beispielsweise in einer Datenanalyseeinrichtung, beispielsweise auf einem Server, angeordnet oder implementiert.

Die hier vorgestellte Vorrichtung 100 dient einer Vorhersage eines Zustandes eines Systems, hier des Einstiegssystems 105, oder einer Komponente. Ein Prüfverfahren für eine solche Vorhersage wird englisch auch als "Condition based Maintenance", kurz "CBM", oder "Predicitive Maintenance" bezeichnet und beschreibt gemäß diesem Ausführungsbeispiel eine Durchführung von Überprüfungen/Verschleißmessungen an Einstiegssystemen 105. Ein von der Vorrichtung 100 durchführbares Verfahren kann auch als ein "Testrunner-Software-unterstützer Prüflauf mit Datenerfassung" bezeichnet werden.

Die Vorrichtung 100 ermöglicht es vorteilhafterweise Prüfabläufe mittels vorgegebener Papier-Checklisten zu vermeiden und somit Kontrolle über eine korrekte Durchführung relevanter Prüfpunkte zu gewinnen. Eine Archivierung des von der Vorrichtung 100 generierten elektronischen Prüfprotokolls 150 über die Lebensdauer des Systems 105 kann dabei gegenüber einer Papier-Checkliste sehr einfach durch Abspeichern erfolgen und das Prüfprotokoll 150 ist ferner schnell und einfach wieder abrufbar oder weiterverarbeitbar. Eine Anpassung des für das Prüfprotokoll 150 zugrunde liegenden Prüfplans ist ebenfalls einfach durchführbar. Einzelne Prüfpunkte/-schritte und/oder Verschleißmessungen im Rahmen der Checks brauchen ferner nicht zwingend manuell durchgeführt werden, wenn die dafür benötige Information vollständig in der Türsteuerung DCU vorhanden ist. Derartige Informationen werden von der Schnittstelle 115 schnell und einfach als Datensignale 135 empfangen. Dies führt dazu, dass die Prüfabläufe lediglich eine sehr kurze Zeit in Anspruch nehmen. Die Vorrichtung 100 ermöglicht also zusammengefasst eine Bereitstellung eines Verfahrens zur teil-/automatischen Durchführung von definierten Prüfabläufen.

Gemäß diesem Ausführungsbeispiel ist innerhalb eines Steuergeräts, hier innerhalb des Türsteuergeräts DCU, ein Softwaremodul bereitgestellt, welches dazu ausgebildet ist, um die Einstiegssystemwerte, welche beliebige hinterlegte Informationen bezüglich des Systems, hier des Einstiegssystems 105, sein können, für die Vorrichtung 100 bereitzustellen. Dieses Softwaremodul ist gemäß einem Ausführungsbeispiel ebenfalls Teil der Vorrichtung 100. Ferner ist eine eigenständige Software, hier die Schnittstelle 115 der Vorrichtung 100, auf einem von dem Steuergerät unabhängigen Gerät oder Device bereitgestellt, das gemäß diesem Ausführungsbeispiel als das mobile Prüfgerät 152 in Form des Laptops, Smartphones, eines Tablets oder einer VR/AR-Brille ausgeformt ist. Das mobile Prüfgerät 152 wird im Folgenden auch als "unabhängiges Gerät" bezeichnet. Ermöglicht ist hierbei eine Herstellung einer Verbindung zwischen dem Steuergerät und dem unabhängigen Gerät. Die Software auf dem unabhängigen Gerät führt gemäß einem Ausführungsbeispiel den im Prüfplan zuvor definierten Prüfablauf durch, durch die Möglichkeit mit dem Steuergerät kommunizieren zu können, werden gemäß einem Ausführungsbeispiel alle im Steuergerät vorhandenen Informationen ausgelesen. Somit laufen einzelne Prüfpunkte des Prüfablaufs voll automatisch ab, bei anderen Prüfpunkten/Messungen, welche einen manuellen Eingriff erfordern, kann ein in einer Steuerung erfasstes Ergebnis automatisch ausgelesen werden. Rein manuelle Prüfpunkte, über deren Durchführung innerhalb der Steuerung keinerlei Informationen vorliegen, können im Rahmen der Prüfsoftware auf dem unabhängigen Gerät von dem Prüfer 155 bestätigt werden.

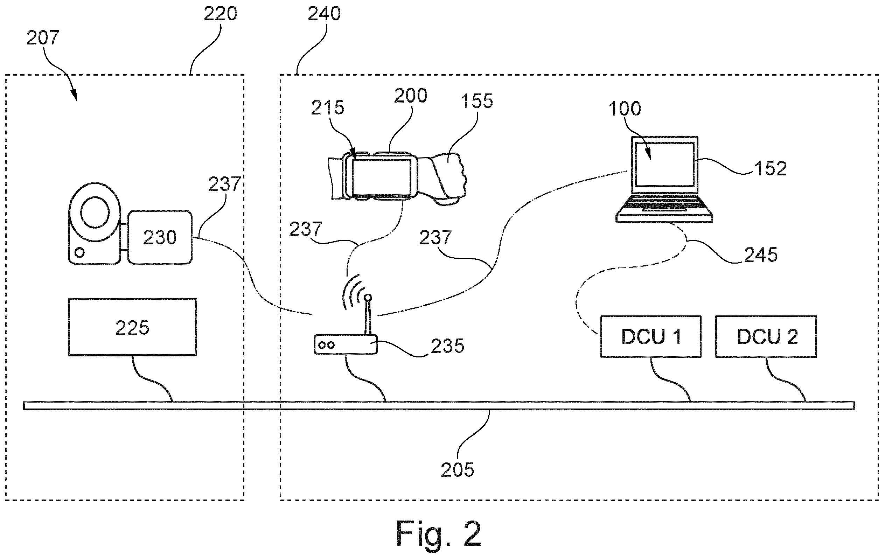

Es folgt die Beschreibung eines Anwendungsbeispiels der hier vorgestellten Vorrichtung 100:
Das mobile Prüfgerät 152 ist gemäß einem Ausführungsbeispiel mittels eines Netzwerks, beispielsweise eines Zugnetzwerks, beispielsweise mittels Ethernet bzw. einem Ethernet-Protokoll, mit den Türsteuergeräten DCU verbunden. Die Prüflaufsoftware wird gemäß einem Ausführungsbeispiel auf dem mobilen Prüfgerät 152 gestartet und das zu überprüfende Einstiegssystem 105 ausgewählt, beispielsweise manuell von dem Prüfer 155. Auf dem mobilen Prüfgerät 152 werden dem Anwender gemäß einem Ausführungsbeispiel die einzelnen Prüfpunkte und die dafür notwendigen Arbeitsschritte auf der Anzeigeeinrichtung 160 und/oder einer weiteren Anzeigeeinrichtung dargestellt, siehe hierzu auch die Figuren 2, 3 und 4. Die Software führt den Anwender gemäß einem Ausführungsbeispiel durch den Prüfablauf und dokumentiert die Ergebnisse jedes Prüfpunkts entweder automatisch, wenn die dafür notwendige Information im verbunden Steuergerät vorliegt, oder veranlasst den Anwender die benötige Information manuell einzugeben. Nach Abschluss des Prüfablaufs stellt die Software dem Anwender das elektronische Prüfprotokoll 150 zur Verfügung, welches gemäß einem Ausführungsbeispiel archiviert wird. Um eine Bedienerfreundlichkeit des Prüfablaufs zu erhöhen, werden gemäß einem Ausführungsbeispiel auch mehrere unabhängige Geräte kombiniert, beispielsweise ein Notebook, welches mit dem Steuergerät kommuniziert und alle vorhandenen Informationen anzeigt, und gemäß einem Ausführungsbeispiel zusätzlich ein Smartphone, welches beispielsweise nur die notwendigsten Informationen anzeigt, jedoch ein "Hands-free usage", also eine Freihändigkeit des Prüfers 155, erlaubt. Vorteile der hier vorgestellten Vorrichtung 100 sind die Bereitstellung eines digitalen Prüfverfahrens für Einstiegssysteme 105, die Kommunikation mit dem Steuergerät des zu überprüfenden Systems 105, um vorhandene Informationen auszulesen, und, dass die Prüfabläufe so möglichst zeitoptimiert durchführbar sind. Es erfolgen so eine Zeitreduktion durch die Kommunikation mit dem Steuergerät und somit ein teilweiser Entfall von manuellen Prüfpunkten, eine gesicherte Durchführung aller Prüfpunkte durch den Software-gestützten Prozess und eine Erleichterung der Archivierung und Weiterverarbeitung der Prüfprotokolle 150, da diese gemäß einem Ausführungsbeispiel elektronisch zur Verfügung stehen.

**Fig. 2** zeigt eine schematische Darstellung einer Vorrichtung 100 gemäß einem Ausführungsbeispiel. Dabei kann es sich um die in in Fig. 1 beschriebene Vorrichtung 100 handeln. Gezeigt ist ein von der Vorrichtung 100 durchführbares Konzept « Hands-free usage » inklusive Kommunikationswege.

Die Einleseeinrichtung der Vorrichtung 100 ist gemäß diesem Ausführungsbeispiel ferner dazu ausgebildet, um das Eingabesignal von einem WLAN-fähigen mobilen Gerät 200 einzulesen und/oder bereitzustellen, wobei das mobile Gerät 200 gemäß diesem Ausführungsbeispiel dazu ausgeformt ist, um an einem Körperteil befestigt zu werden. Das mobile Prüfgerät 152 kommt gemäß einem Ausführungsbeispiel zusätzlich zum Einsatz, wobei gemäß einem Ausführungsbeispiel auf dem mobilen Prüfgerät 152 ein gesamter Prüfplan angezeigt und auf dem mobilen Gerät 200 lediglich ein aktuell durchzuführender Prüfschritt angezeigt wird und/oder betätigt werden kann.

Das hier lediglich beispielhaft als Notebook ausgeformte mobile Prüfgerät 152 ist gemäß diesem Ausführungsbeispiel mittels eines Zugnetzwerks 205 des Schienenfahrzeugs 207 mit dem Türsteuergerät DCU 1 verbunden. Zumindest ein weiteres Türsteuergerät DCU 2 für ein weiteres Einstiegssystem des Schienenfahrzeugs 207 ist gemäß diesem Ausführungsbeispiel mit dem Zugnetzwerk 205 verbunden. Das Zugnetzwerk 205 stellt außerdem gemäß diesem Ausführungsbeispiel WLAN zur Verfügung, mittels dessen das mobile Gerät 200 gemäß einem Ausführungsbeispiel in Form eines Smartphones verbunden ist. Das Smartphone ist für eine bessere Bedienbarkeit am Unterarm des Prüfers 155 befestigt angeordnet. Am Notebook wird die Prüflaufsoftware gestartet und die entsprechende Steuerung ausgewählt. Der Anwender sieht an der weiteren Anzeigeeinrichtung, hier "Screen" 215 genannt, des Smartphones kurze Anweisungen für den jeweiligen Prüfpunkt und kann die korrekte Durchführung der Anweisungen bestätigen und/oder falls gefordert auch Informationen eingeben oder mittels auf dem unabhängigen Gerät vorhandener Komponenten wie Audio-, Video-und/oder Fotoaufzeichnung, erfassen. Die Software führt den Prüfer 155 Prüfpunkt für Prüfpunkt durch den Prüfablauf und erfasst die Ergebnisse entweder automatisch aus dem Türsteuergerät DCU 1 oder veranlasst den Prüfer 155, das Ergebnis manuell zu ergänzen. Nach Abschluss des Prüfablaufs stellt die Software das Prüfprotokoll in elektronischer Form zur Verfügung. Während der Durchführung eines Prüfablaufs befindet sich das Türsteuergerät DCU 1 in einem eigens dafür definierten Prüfmodus.

Die Einleseeinrichtung der Vorrichtung 100 ist ferner gemäß diesem Ausführungsbeispiel dazu ausgebildet, um ein Bildsignal einzulesen, das ein Abbild zumindest eines Ausschnitts eines Führerstandes 220 des Schienenfahrzeugs 207 repräsentiert, wobei die Generiereinrichtung dazu ausgebildet ist, um das Prüfprotokoll unter Verwendung des Bildsignals zu generieren. Die Einleseeinrichtung ist hierbei dazu ausgebildet, um das Bildsignal von einer auf einen Monitor 225 des Führerstandes 220 gerichteten Kamera 230, hier in Form einer WiFi-fähigen "IP Cam", einzulesen. Die Kamera 230 dient ferner dazu einen von der Tür ausgelösten Zustand am Fahrzeug zu erfassen. Alternativ kann dieser Zustand auch über das Zugnetzwerk 205 (beispielsweise TCMS) an die Türsteuerung zur Verfügung gestellt werden und dann von der Türsteuerung in die Datenbank geschrieben werden. Der Monitor 225 ist gemäß diesem Ausführungsbeispiel mit dem Zugnetzwerk 207 verbunden und für ein sogenanntes "Grünschleifen-Monitoring" ausgebildet. Als eine Grünschleife kann so ein Zustand bezeichnet werden bei der der Zustand in Summe für alle Türen gebildet wird und anzeigt, "alle Türen geschlossen" sind. Da dies nicht für einzelne Türen differenziert werden kann, sollte bei paralleler Prüfung mehrerer Türen eine Interaktion der Prüfgeräte stattfinden um eine Zuordnung des Zustands am Fahrzeug zum jeweiligen Türsystem/Prüfschritt zu ermöglichen.

Ein mobiler Router 235 zur Bereitstellung von WiFi 237 ist gemäß diesem Ausführungsbeispiel in oder an einem Waggon 240 des Schienenfahrzeugs 207 aufgenommen und/oder mit dem Zugnetzwerk 205 verbunden. Das mobile Prüfgerät 152 ist gemäß diesem Ausführungsbeispiel mittels WiFi 237 mit dem mobilen Gerät 200 und/oder der Kamera 230 verbunden. Das Notebook ist gemäß diesem Ausführungsbeispiel optional mittels eines RS232-Kabels 245 mit dem Türsteuergerät DCU 1 verbunden.

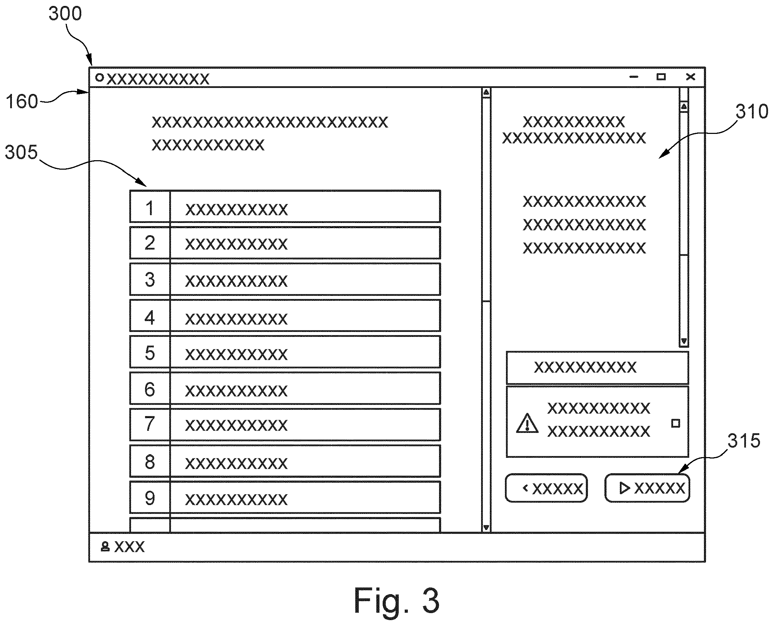

Fig. 3 zeigt eine schematische Darstellung eines Prüfplans 300 einer Vorrichtung gemäß einem Ausführungsbeispiel. Dabei kann es sich um den in Fig. 1 oder 2 beschriebenen Prüfplan 300 handeln. Gezeigt ist der Prüfplan 300 als Benutzerschnittstelle, auch "Interface" genannt, für den Prüfer. Der Prüfplan 300 ist in der hier gezeigten Darstellung auf der Anzeigeeinrichtung 160 des mobilen Prüfgeräts oder dem Screen des mobilen Geräts anzeigbar.

Der Prüfplan 300 zeigt gemäß diesem Ausführungsbeispiel eine Anzahl, Aufstellung und/oder Bezeichnung durchzuführender Prüfschritte 305, Sicherheitsanweisungen 310 und/oder Bedientasten 315 zum Starten des Prüfablaufs, Anhalten des Prüfablaufs und/oder Navigieren innerhalb des Prüfablaufs.

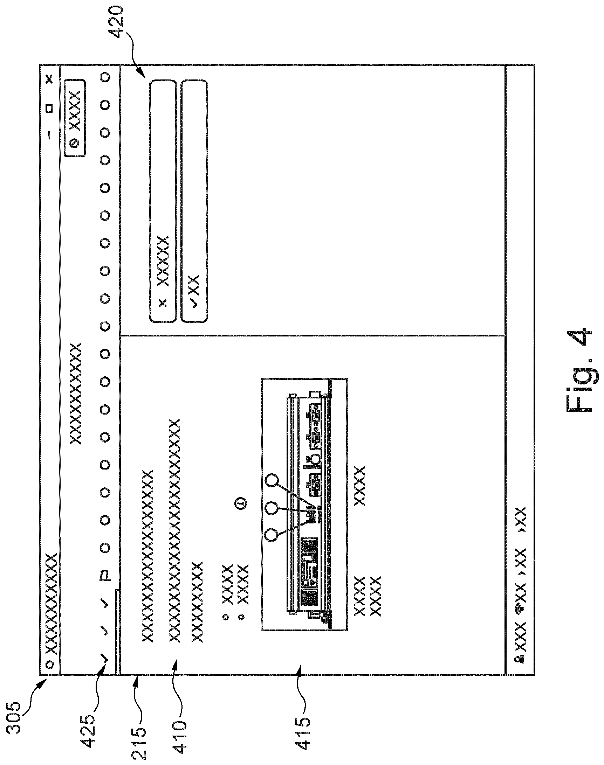

Fig. 4 zeigt eine schematische Darstellung eines Prüfschritts 305 eines Prüfplans einer Vorrichtung gemäß einem Ausführungsbeispiel. Dabei kann es sich um den in Fig. 3 gezeigten oder in einer der vorangehenden Figuren beschriebenen Prüfplan handeln. Der Prüfschritt 305 ist in der hier gezeigten Darstellung auf der Anzeigeeinrichtung des mobilen Prüfgeräts oder dem Screen 215 des mobilen Geräts anzeigbar.

Der Prüfschritt 305 wird gemäß einem Ausführungsbeispiel ansprechend auf das in Fig. 1 beschriebene Aufforderungssignal angezeigt. Der Prüfschritt 305 zeigt gemäß diesem Ausführungsbeispiel eine schriftliche Anweisung 410 einer erforderlichen Handlung, eine Abbildung 415 zur Hilfestellung für den Prüfer, Auswahltasten 420 zum Eingeben eines Prüfergebnisses des Prüfschritts 305 und/oder eine Übersicht 425 bereits erledigter und/oder noch zu erledigender weiterer Prüfschritte.

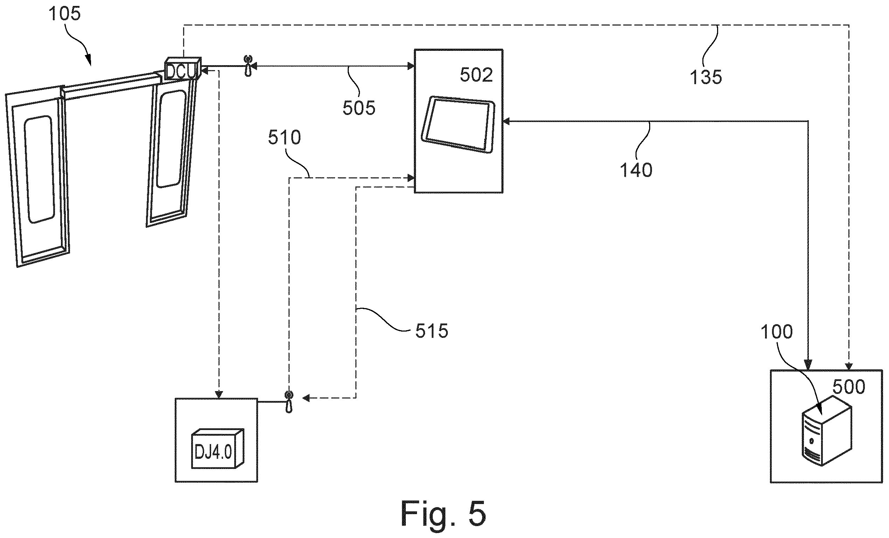

**Fig. 5** zeigt eine schematische Darstellung eines Konzepts für einen mittels Software unterstützten Prüflauf unter Verwendung einer Vorrichtung 100 gemäß einem Ausführungsbeispiel. Der Prüflauf ist von der in einer der vorangegangenen Figuren beschriebenen Vorrichtung 100 ansteuerbar und/oder durchführbar. Einrichtungen der Vorrichtung 100 sind gemäß diesem Ausführugsbeispiel zumindest teilweise in dem Back Office 500 aufgenommen oder implementiert.

Ein mobiler Client 502 in Form des mobilen Prüfgeräts oder mobilen Geräts ist gemäß diesem Ausführungsbeispiel mittels einer "Hands free"-Verbindung 505 mit dem Türsteuergerät DCU verbunden. Die Vorrichtung 100 ist gemäß diesem Ausführungsbeispiel ausgebildet, um eine Verfügbarkeit eines sogenannten "DoorJacks" DJ zu erkennen und ansprechend auf ein Erkennen des DoorJacks DJ zusätzliche Anwendungen (DoorJack package) auf dem mobilen Client 502 mittels eines Startsignals 510 zu aktivieren. Der DoorJack DJ ist dazu ausgebildet, um eine Simulation einer Produktivumgebung und zusätzliche Messfunktionen auszuführen. Beispiele hierfür sind: Simulation TCMS (Train Control and Management System), Trainline, etc. Signale und/oder Stromversorgung. Mittels des mobilen Clients 502 sind die folgenden Anwendungen und Steuerungen ermöglicht: eine Standard Diagnose/St03A, Durchführung eines Safety Checks, Verschleißprüfungsroutinen und/oder Setzen von CBM-Parametern auf dem Türsteuergerät DCU. Ansprechend auf das Startsignal 510 ist eine oder mehrere Anwendungen des DoorJacks DJ gemäß diesem Ausführungsbeispiel mittels des mobilen Clients 502 durch entsprechende Ansteuersignale 515 ansteuerbar. Wenn verfügbar, werden Daten in Form des Datensignals 135 vom Türsteuergerät DCU an das Back Office 500 übermittelt. Zwischen dem mobilen Client 502 und dem Back Office 500 erfolgt gemäß einem Ausführungsbeispiel ein Abruf/Bereitstellen von: CBM-Parametern, eines Configuration Files, Set Up/Installation Files, einer Dokumentation, Checklisten, Testergebnissen und/oder Protokollen (Safety Check). Das Back Office 500 ist dazu ausgebildet, um eine Datenanalyse und Bereitstellung von zusätzlichen Services durchzuführen, hierzu gehören gemäß einem Ausführungsbeispiel Indikatoren und/oder Remote Diagnostics.

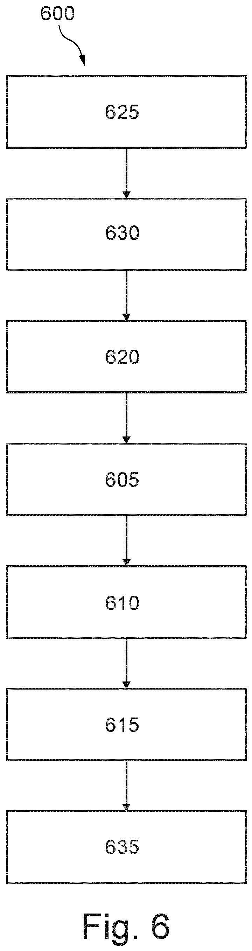

**Fig. 6** zeigt ein Ablaufdiagramm eines Verfahrens 600 zum Prüfen eines Einstiegssystems für ein Fahrzeug gemäß einem Ausführungsbeispiel. Dieses Verfahren 600 ist von der in einer der vorangegangenen Figuren beschriebenen Vorrichtung ausführbar und/oder ansteuerbar.

Das Verfahren 600 weist einen Schritt 605 des Empfangens und/oder einen Schritt 610 des Einlesens und einen Schritt 615 des Generierens auf. Im Schritt 605 des Empfangens wird ein Datensignal über eine Schnittstelle zu einer Datenbank empfangen, wobei das Datensignal zumindest einen in der Datenbank hinterlegten Einstiegssystemwert des Einstiegssystems repräsentiert. Im Schritt 610 des Einlesens wird ein Eingabesignal eingelesen, das einen manuell eingegebenen Prüfwert eines Prüfschritts des Einstiegssystems an einer Eingabeeinrichtung repräsentiert. Im Schritt 615 des Generierens wird ein elektronisches Prüfprotokoll unter Verwendung des Eingabesignals und/oder Datensignals generiert.

Optional weist das Verfahren 600 ferner gemäß diesem Ausführungsbeispiel einen Schritt 620 des Aktivierens, einen Schritt 625 des weiteren Einlesens, einen Schritt 630 des Anzeigens und/oder einen Schritt 635 des Speicherns auf.

Im Schritt 620 des Aktivierens wird der Schritt 605 des Empfangens ansprechend auf ein Aktivierungssignal durchgeführt. Im Schritt 625 des weiteren Einlesens wird ein Prüfplan eingelesen und/oder angezeigt, der eine Aufstellung durchzuführender Prüfschritte umfasst, wobei der Schritt 605 des Empfangens und/oder der Schritt 610 des Einlesens in Abhängigkeit von dem Prüfplan durchgeführt wird. Im Schritt 630 des Anzeigens wird zumindest ein Aufforderungssignal ausgegeben, das für einen Nutzer einen durchzuführenden Prüfschritt auf einer Anzeigeeinrichtung anzeigt, um das Eingabesignal zu erhalten. Im Schritt 635 des Speicherns wird das vollständige Prüfprotokoll in einer nicht flüchtigen Speichereinrichtung gespeichert.

Denkbar ist ferner auch ein Ausführungsbeispiel, bei dem im Verfahren 600 nach Schritt 620 in der Türsteuerung eine Routine bzw. ein weiterer Schritt gestartet wird, welche den Einstiegssystemwert generiert, welcher dann in der Datenbank gespeichert wird.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- DCU: Türsteuergerät
- DJ: DoorJack

- 100: Vorrichtung zum Prüfen eines Einstiegssystems für ein Fahrzeug
- 105: Einstiegssystem
- 110: Fahrzeug
- 115: Schnittstelle
- 120: Datenbank
- 125: Einleseeinrichtung
- 130: Generiereinrichtung
- 135: Datensignal
- 140: Eingabesignal
- 145: Eingabeeinrichtung
- 150: Prüfprotokoll
- 152: mobiles Prüfgerät
- 155: Prüfer
- 160: Anzeigeeinrichtung

- 200: mobiles Gerät
- 205: Zugnetzwerk
- 207: Schienenfahrzeug
- 215: Screen
- 220: Führerstand
- 225: Monitor
- 230: Kamera
- 235: Router
- 237: WiFi
- 240: Waggon
- 245: RS232-Kabel

- 300: Prüfplan
- 305: Prüfschritt
- 310: Sicherheitsanweisungen
- 315: Bedientaste

- 410: Anweisung
- 415: Abbildung
- 420: Auswahltaste
- 425: Übersicht

- 500: Back Office
- 502: mobiler Client
- 505: "Hands free"-Verbindung
- 510: Startsignal
- 515: Ansteuersignal

- 600: Verfahren zum Prüfen eines Einstiegssystems für ein Fahrzeug
- 605: Schritt des Empfangens
- 610: Schritt des Einlesens
- 615: Schritt des Generierens
- 620: Schritt des Aktivierens
- 625: Schritt des weiteren Einlesens
- 630: Schritt des Anzeigens
- 635: Schritt des Speicherns

## Patentansprüche

1. Verfahren (600) zum Prüfen eines Einstiegssystems (105) für ein Fahrzeug (110; 207), wobei das Verfahren (600) die folgenden Schritte aufweist:
Empfangen (605) eines Datensignals (135) über eine Schnittstelle (115) zu einer Datenbank (120), wobei das Datensignal (135) zumindest einen in der Datenbank (120) hinterlegten Einstiegssystemwert des Einstiegssystems (105) repräsentiert; und/oder
Einlesen (610) eines Eingabesignals (140), das einen manuell eingegebenen Prüfwert eines Prüfschritts (305) des Einstiegssystems (105) an einer Eingabeeinrichtung (145) repräsentiert; und
Generieren (615) eines elektronischen Prüfprotokolls (150) unter Verwendung des Eingabesignals (140) und/oder Datensignals (135).

2. Verfahren (600) gemäß Anspruch 1, mit einem Schritt (620) des Aktivierens, in dem der Schritt (605) des Empfangens ansprechend auf ein Aktivierungssignal durchgeführt wird.

3. Verfahren (600) gemäß Anspruch 2, bei dem nach dem Schritt (620) des Aktivierens ein Schritt des Erzeugens eines weiteren Einstiegssystemwerts generiert wird, welcher dann in der Datenbank (120) gespeichert wird.

4. Verfahren (600) gemäß einem der vorangegangenen Ansprüche, mit einem Schritt (625) des weiteren Einlesens, in dem ein Prüfplan (300) eingelesen und/oder angezeigt wird, der eine Aufstellung durchzuführender Prüfschritte (305) umfasst, wobei der Schritt (605) des Empfangens und/oder der Schritt (610) des Einlesens in Abhängigkeit von dem Prüfplan (300) durchgeführt wird.

5. Verfahren (600) gemäß einem der vorangegangenen Ansprüche, mit einem Schritt (630) des Anzeigens, in dem zumindest ein Aufforderungssignal ausgegeben wird, das für einen Nutzer einen durchzuführenden Prüfschritt (305) auf einer Anzeigeeinrichtung (160; 215) anzeigt, um das Eingabesignal (140) zu erhalten.

6. Verfahren (600) gemäß einem der vorangegangenen Ansprüche, bei dem im Schritt (605) des Empfangens das Datensignal (135) über eine Schnittstelle (115) zu zumindest einem Türsteuergerät (DCU) des Einstiegssystems (105) empfangen wird.

7. Verfahren (600) gemäß einem der vorangegangenen Ansprüche, bei dem im Schritt (605) des Empfangens das Datensignal (135) drahtgebunden, insbesondere mittels eines Ethernet-Protokolls, und/oder drahtlos empfangen wird.

8. Verfahren (600) gemäß einem der vorangegangenen Ansprüche, bei dem im Schritt (610) des Einlesens das Eingabesignal (140) eingelesen wird, wobei der Prüfwert an einer Eingabeeinrichtung (145) eines mobilen Prüfgeräts (152) eingegeben wurde.

9. Verfahren (600) gemäß einem der vorangegangenen Ansprüche, bei dem im Schritt (610) des Einlesens das Eingabesignal (140) von einem WLAN-fähigen mobilen Gerät (200) eingelesen und/oder bereitgestellt wird, insbesondere wobei das mobile Gerät (200) dazu ausgeformt ist, um an einem Körperteil befestigt zu werden.

10. Verfahren (600) gemäß einem der vorangegangenen Ansprüche, mit einem Schritt (635) des Speicherns, in dem das vollständige Prüfprotokoll (150) in einer nicht flüchtigen Speichereinrichtung gespeichert wird.

11. Verfahren (600) gemäß einem der vorangegangenen Ansprüche, bei dem im Schritt (610) des Einlesens ein Bildsignal eingelesen wird, das ein Abbild zumindest eines Ausschnitts eines Führerstandes (220) repräsentiert, wobei im Schritt (615) des Generierens das Prüfprotokoll (150) unter Verwendung des Bildsignals generiert wird.

12. Verfahren (600) gemäß einem der vorangegangenen Ansprüche, bei dem im Schritt (605) des Empfangens eine Zuordnungsinformation eingelesen wird, die eine Zuordnung des hinterlegten Einstiegssystemwerts zu einer von mehreren zu prüfenden Einstiegssystemen repräsentiert, wobei im Schritt (615) des Generierens das Prüfprotokoll (150) unter Verwendung der Zuordnungsinformation erfolgt.

13. Vorrichtung (100), die eingerichtet ist, um die Schritte (605, 610, 615, 620, 625, 630, 635) des Verfahrens (600) gemäß einem der vorangegangenen Ansprüche in entsprechenden Einheiten (115, 125, 130) auszuführen und/oder anzusteuern.

14. Computerprogramm, das dazu eingerichtet ist, das Verfahren (600) gemäß einem der Ansprüche 1 bis 12 auszuführen und/oder anzusteuern.

15. Maschinenlesbares Speichermedium, auf dem das Computerprogramm nach Anspruch 14 gespeichert ist.
